(19) **Europäisches Patentamt / European Patent Office / Office européen des brevets**

(11) **EP 4 644 518 A1**

(12) ## EUROPEAN PATENT APPLICATION
published in accordance with Art. 153(4) EPC

(43) Date of publication:
**05.11.2025   Bulletin 2025/45**

(21) Application number: **23911863.1**

(22) Date of filing: **20.12.2023**

(51) International Patent Classification (IPC):
*C12G 3/04* $^{(2019.01)}$        *C12C 5/02* $^{(2006.01)}$
*C12C 11/00* $^{(2006.01)}$       *C12C 12/00* $^{(2006.01)}$
*C12G 3/021* $^{(2019.01)}$

(52) Cooperative Patent Classification (CPC):
**C12C 5/02; C12C 11/00; C12C 12/00; C12G 3/021; C12G 3/04**

(86) International application number:
**PCT/JP2023/045605**

(87) International publication number:
**WO 2024/143083 (04.07.2024 Gazette 2024/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **26.12.2022   JP 2022208263**

(71) Applicant: **Suntory Holdings Limited**
**Osaka-shi, Osaka 530-8203 (JP)**

(72) Inventor: **YOSHII, Takaaki**
**Kawasaki-shi, Kanagawa 211-0067 (JP)**

(74) Representative: **Vossius & Partner**
**Patentanwälte Rechtsanwälte mbB**
**Siebertstrasse 3**
**81675 München (DE)**

(54) **BEER-FLAVORED BEVERAGE**

(57)     Provided is a beer-flavored beverage having an alcohol content of 10.0 (v/v)% or more and a maltotetraose concentration of 0.007 g/100 mL or more.

EP 4 644 518 A1

**Description**

Technical Field

The present invention relates to a beer-flavored beverage and a method for producing a beer-flavored beverage.

Background Art

In the related art, various beer-flavored beverages have been developed and distributed to the market in response to recent diversified preferences of consumers.

For example, Patent Document 1 discloses a high alcohol beer-flavored beverage containing citric acid and phenethyl alcohol, the content of citric acid being 270 mg/L or more and 1100 mg/L or less, and the content of phenethyl alcohol being 40 mg/L or more and 180 mg/L or less.

Citation List

Patent Document

Patent Document 1: JP 2021-159020 A

Summary of Invention

Technical Problem

A beer-flavored beverage having a high alcohol content has tended to have strong unsuitable bitterness and to be less likely to feel drinking sensation. Under such circumstances, there is a demand for a high alcohol beer-flavored beverage that suppresses unsuitable bitterness and has drinking sensation.

Solution to Problem

The present invention provides a beer-flavored beverage having an alcohol content and a maltotetraose concentration of a predetermined value or more. Specifically, the present invention provides the following aspects [1] to [8], for example.

[1] A beer-flavored beverage having an alcohol content of 10.0 (v/v)% or more and a maltotetraose concentration of 0.007 g/100 mL or more.

[2] The beer-flavored beverage according to [1], wherein a real extract concentration is 0.5 (w/w)% or more and 40.0 (w/w)% or less.

[3] The beer-flavored beverage according to [1] or [2], wherein a ratio [maltotetraose concentration/alcohol content] of the maltotetraose concentration (unit: g/100 mL) to the alcohol content (unit: (v/v)%) is 0.0006 or more and 0.8000 or less.

[4] The beer-flavored beverage according to any of [1] to [3], wherein the alcohol content is 15.0 (v/v)% or more and 30.0 (v/v)% or less.

[5] The beer-flavored beverage according to any of [1] to [4], wherein the maltotetraose concentration is 0.050 g/100 mL or more and 3.500 g/100 mL.

[6] The beer-flavored beverage according to any of [1] to [5], wherein a ratio [maltotetraose concentration/real extract concentration] of the maltotetraose concentration (unit: g/100 mL) to the real extract concentration (unit: (w/w)%) is 0.060 or more and 5.000 or less.

[7] The beer-flavored beverage according to any of [1] to [6], wherein a ratio [real extract concentration/alcohol content] of the real extract concentration (unit: (w/w)%) to the alcohol content (unit: (v/v)%) is 0.005 or more and 5.00 or less.

[8] A method for producing a beer-flavored beverage, the method including at least steps (a) and (b) described below:

step (a): adjusting an alcohol content of the beer-flavored beverage to 10.0 (v/v)% or more; and
step (b): adjusting a maltotetraose concentration of the beer-flavored beverage to 0.070 g/100 mL or more.

Advantageous Effects of Invention

A beer-flavored beverage according to a preferred aspect of the present invention provides, for example, a beer-flavored beverage which is suppressed in unsuitable bitterness and has drinking sensation.

Description of Embodiments

1. Beer-flavored beverage

As used herein, the term "beer-flavored beverage" refers to an alcohol-containing carbonated beverage with a beer-like flavor. That is, unless otherwise specified, the beer-flavored beverage as used herein encompasses any carbonated beverage with a flavor of beer.

Thus, the "beer-flavored beverage" includes not only beer and fermented beer-flavored beverages, which are malt-fermented beverages produced by fermenting malt, hops, and water as raw materials with yeast, but also carbonated beverages to which a beer flavoring containing a flavor component such as an ester, a higher alcohol, lactone, or the like is added.

In addition, the beer-flavored beverage according to an aspect of the present invention may be a fermented beer-flavored beverage that has undergone a fermentation step using yeast or may be a non-fermented alcohol-containing beer-flavored beverage to which spirits (liquor) and the like is added without undergoing the fermentation step.

The fermented beer-flavored beverage may be a top-fermented beer-flavored beverage (ale beer-flavored beverage) brewed through a fermentation step using a top-fermenting yeast (such as Saccharomyces), a bottom-fermented beer-flavored beverage of a lager beer-flavored beverage and a pilsner beer-flavored beverage brewed through a fermentation step using a bottom-fermenting yeast (such as Saccharomyces), or a beverage obtained by mixing the top-fermented beer-flavored beverage and the bottom-fermented beer-flavored beverage. The term "fermentation" as used herein may be alcoholic fermentation that produces alcohol. In the case of non-alcoholic fermentation, spirits (liquor) and the like can be added to be prepared as a beer-flavored beverage according to an aspect of the present invention.

In addition, the beer-flavored beverage of an aspect of the present invention may be a malt-containing beer-flavored beverage using malt as a raw material, or may be a malt-free beer-flavored beverage not using malt. Examples of the malt-containing beer-flavored beverage include barley malt-containing beer-flavored beverages.

In the beer-flavored beverage according to an aspect of the present invention, the alcohol content (ethanol content) is 10.0 (v/v)% or more. In the present specification, the "high alcohol beer-flavored beverage" refers to a beer-flavored beverage having an alcohol content of 10.0 (v/v)% or more.

The beer-flavored beverage according to an aspect of the present invention has an alcohol content (ethanol content) of 10.0 (v/v)% or more, may be 10.5 (v/v)% or more or 11.0 (v/v)% or more, or may be 11.5 (v/v)% or more, 12.0 (v/v)% or more, 12.5 (v/v)% or more, 13.0 (v/v)% or more, 13.5 (v/v)% or more, 14.0 (v/v)% or more, 14.5 (v/v)% or more, 15.0 (v/v)% or more, 15.5 (v/v)% or more, 16.0 (v/v)% or more, 16.5 (v/v)% or more, 17.0 (v/v)% or more, 17.5 (v/v)% or more, 18.0 (v/v)% or more, 18.5 (v/v)% or more, 19.0 (v/v)% or more, 19.5 (v/v)% or more, 20.0 (v/v)% or more, 21.0 (v/v)% or more, 22.0 (v/v)% or more, 23.0 (v/v)% or more, 24.0 (v/v)% or more, 25.0 (v/v)% or more, 26.0 (v/v)% or more, 27.0 (v/v)% or more, 28.0 (v/v)% or more, 29.0 (v/v)% or more, or 30.0 (v/v)% or more, and may be 50.0 (v/v)% or less, 47.0 (v/v)% or less, 45.0 (v/v)% or less, 43.0 (v/v)% or less, 40.0 (v/v)% or less, 37.0 (v/v)% or less, 35.0 (v/v)% or less, 33.0 (v/v)% or less, 30.0 (v/v)% or less, 29.0 (v/v)% or less, 28.0 (v/v)% or less, 27.0 (v/v)% or less, 26.0 (v/v)% or less, 25.0 (v/v)% or less, 24.0 (v/v)% or less, 23.0 (v/v)% or less, 22.0 (v/v)% or less, 21.0 (v/v)% or less, or 20.0 (v/v)% or less.

Note that, as used herein, the alcohol content is indicated as a percentage ((v/v)%) based on volume/volume. The content of alcohol of the beverage can be measured by any known method and can be measured, for example, with a vibrating densimeter.

The alcohol content of the beer-flavored beverage according to an aspect of the present invention can be adjusted to a desired range by appropriately setting the types of raw materials (such as barley, malt, corn grits, and sugar solution), the amounts of raw materials, the type of enzyme, the amount of enzyme added, the timing of enzyme addition, the saccharification time in a preparation tank, the protein decomposition time in the preparation tank, the pH in the preparation tank, the pH in a preparation step (wort production step from feeding of malt until before addition of yeast), the amount of the acid to be added used in the pH adjustment, the timing of the pH adjustment (such as at the time of preparation, fermentation. or completion of fermentation, before beer filtration, and after beer filtration), the set temperature and holding time in each temperature region in preparation of wort (including during saccharification), the original extract concentration in a pre-fermentation liquid, the original extract concentration in the fermentation step, the fermentation conditions (such as the oxygen concentration, aeration conditions, yeast species, amount of yeast added, the number of yeast grown, the removal timing of yeast, fermentation temperature, fermentation time, pressure setting, and carbon dioxide concentration), presence or absence of addition of a spirit, a distilled alcohol or the like, the addition amount in the case of addition, and the like.

The beer-flavored beverage according to an aspect of the present invention may contain spirits (liquor) derived from grain and the like as an alcohol component to adjust the alcohol content to the range described above.

In the present specification, the "spirits" means an alcoholic beverage produced by saccharifying grain, such as wheat, rice, buckwheat, corn, potato, or sugar cane, as a raw material using malt or, as necessary, an enzymatic agent, fermenting the saccharified product using yeast, and then distilling the fermented product. As the grain which is a raw material of the spirits, a plant belonging to the family Gramineae is preferable, and wheat is more preferable.

A high alcohol beer-flavored beverage tends to have strong unsuitable bitterness and to be less likely to feel drinking sensation. In response to such a problem peculiar to a high alcohol beer-flavored beverage, the beer-flavored beverage according to an aspect of the present invention is a high alcohol beer-flavored beverage having pleasant drinking sensation by suppressing unsuitable bitterness by adjusting the maltotetraose concentration. Thus, the present invention provides a beverage containing a certain amount or more of maltotetraose.

Maltotetraose is an oligosaccharide having a degree of polymerization of glucose of 4, and maltotetraose may be used, or a commercially available product (for example, "TETRUP (registered trademark)" available from Hayashibara, "Nisshoku Fuji-oligo (registered trademark) # 360" or "Nisshoku Fuji-oligo (registered trademark) # 450" available from NIHON SHOKUHIN KAKO CO., LTD.) containing maltotetraose may be used.

In the beer-flavored beverage according to an aspect of the present invention, the maltotetraose concentration is 0.007 g/100 mL or more, may be 0.008 g/100 mL or more, 0.009 g/100 mL or more, 0.010 g/100 mL or more, 0.025 g/100 mL or more, 0.050 g/100 mL or more, 0.075 g/100 mL or more, 0.100 g/100 mL or more, 0.250 g/100 mL or more, 0.500 g/100 mL or more, 0.750 g/100 mL or more, 1.000 g/100 mL or more, 1.250 g/100 mL or more, 1.500 g/100 mL or more, 1.750 g/100 mL or more, 2.000 g/100 mL or more, 2.250 g/100 mL or more, 2.500 g/100 mL or more, 2.750 g/100 mL or more, 3.000 g/100 mL or more, 3.250 g/100 mL or more, 3.500 g/100 mL or more, 3.750 g/100 mL or more, 4.000 g/100 mL or more, 4.250 g/100 mL or more, 4.500 g/100 mL or more, 4.750 g/100 mL or more, 5.000 g/100 mL or more, 5.250 g/100 mL or more, 5.500 g/100 mL or more, 5.750 g/100 mL or more, 6.000 g/100 mL or more, 6.500 g/100 mL or more, 7.000 g/100 mL or more, 7.500 g/100 mL or more, 8.000 g/100 mL or more, 8.500 g/100 mL or more, 9.000 g/100 mL or more, 9.500 g/100 mL or more, or 10.000 g/100 mL or more, and may be 10.000 g/100 mL or less, 9.500 g/100 mL or less, 9.000 g/100 mL or less, 8.500 g/100 mL or less, 8.000 g/100 mL or less, 7.500 g/100 mL or less, 7.000 g/100 mL or less, 6.500 g/100 mL or less, 6.000 g/100 mL or less, 5.750 g/100 mL or less, 5.500 g/100 mL or less, 5.250 g/100 mL or less, 5.000 g/100 mL or less, 4.750 g/100 mL or less, 4.500 g/100 mL or less, 4.250 g/100 mL or less, 4.000 g/100 mL or less, 3.750 g/100 mL or less, 3.500 g/100 mL or less, 3.250 g/100 mL or less, 3.000 g/100 mL or less, 2.750 g/100 mL or less, 2.500 g/100 mL or less, 2.250 g/100 mL or less, 2.000 g/100 mL or less, 1.750 g/100 mL or less, 1.500 g/100 mL or less, 1.250 g/100 mL or less, 1.000 g/100 mL or less, 0.750 g/100 mL or less, 0.500 g/100 mL or less, 0.250 g/100 mL or less, 0.100 g/100 mL or less, 0.075 g/100 mL or less, 0.050 g/100 mL or less, 0.025 g/100 mL or less, or 0.010 g/100 mL or less.

The maltotetraose concentration can be analyzed and quantified using high performance liquid chromatography and the like using a column for analyzing saccharides. For example, the analysis can be performed under the following conditions.

- HPLC apparatus: Agilent 1290 series
- Detector: ESA Corona Ultra (Dionex)
- Mobile phase: liquid A water: 28% ammonia water = 999:1
Liquid B acetonitrile: 28% ammonia water = 999:1
- Sample introduction condition: 0 min liquid B 80%

  12 min liquid B 40%
  14 min liquid B 40%

- Flow rate: 0.4 ml/min
- Equilibration time: 10 min
- Column: Water ACQUITY BEH AMIDE 1.7 $\mu$m 2.1 $\times$ 100 mm
- Column temperature: 35°C
- Insertion amount: 2 $\mu$l.

In the beer-flavored beverage according to an aspect of the present invention, from the viewpoint of providing a high alcohol beer-flavored beverage excellent in balance between the effect of suppressing unpleasant bitterness and pleasant drinking sensation while having an appropriate alcohol stimulus feeling, a ratio [maltotetraose concentration/alcohol content] of the maltotetraose concentration (unit: g/100 mL) to the alcohol content (unit: (v/v)%) may be 0.0002 or more, 0.0003 or more, 0.0004 or more, 0.0005 or more, 0.0006 or more, 0.0008 or more, 0.0010 or more, 0.0020 or more, 0.0030 or more, 0.0040 or more, 0.0050 or more, 0.0060 or more, 0.0070 or more, 0.0080 or more, 0.0090 or more, 0.0100 or more, 0.0200 or more, 0.0300 or more, 0.0400 or more, 0.0500 or more, 0.0600 or more, 0.0700 or more, 0.0800 or more, 0.0900 or more, 0.1000 or more, 0.1500 or more, 0.2000 or more, 0.2500 or more, 0.3000 or more, 0.3500 or more, 0.4000 or more, 0.4500 or more, or 0.5000 or more, and may be 0.8000 or less, 0.7500 or less, 0.7000 or less, 0.6500 or less, 0.6000 or less, 0.5500 or less, 0.5000 or less, 0.4500 or less, 0.4000 or less, 0.3500 or less, 0.3000 or less, 0.2500 or less, 0.2000 or less, 0.1500 or less, 0.1000 or less, 0.0900 or less, 0.0800 or less, 0.0700 or less, 0.0600 or less, 0.0500 or less, 0.0400 or less, 0.0300 or less, 0.0200 or less, 0.0100 or less, 0.0090 or less, 0.0080 or less, 0.0070 or less, 0.0060 or less, 0.0050 or less, 0.0040 or less, 0.0030 or less, 0.0020 or less, 0.0010 or less, 0.0008 or less, 0.0006 or less, 0.0004 or less, 0.0003 or less, or 0.0002 or less.

A high alcohol beer-flavored beverage tends to have strong unsuitable bitterness and to be less likely to feel drinking sensation. In response to such a problem peculiar to a high alcohol beer-flavored beverage, the beer-flavored beverage according to an aspect of the present invention is a high alcohol beer-flavored beverage having pleasant drinking sensation by further suppressing unsuitable bitterness by adjusting the real extract concentration.

In the beer-flavored beverage according to an aspect of the present invention, the real extract concentration may be 0.5 (w/w)% or more, 0.75 (w/w)% or more, 1.0 (w/w)% or more, 1.5 (w/w)% or more, 2.0 (w/w)% or more, 2.5 (w/w)% or more, 3.0 (w/w)% or more, 3.5 (w/w)% or more, 4.0 (w/w)% or more, 4.5 (w/w)% or more, 5.0 (w/w)% or more, 5.5 (w/w)% or more, 6.0 (w/w)% or more, 6.5 (w/w)% or more, 7.0 (w/w)% or more, 7.5 (w/w)% or more, 8.0 (w/w)% or more, 8.5 (w/w)% or more, 9.0 (w/w)% or more, 9.5 (w/w/)% or more, 10.0 (w/w)% or more, 10.5 (w/w)% or more, 11.0 (w/w)% or more, 11.5 (w/w)% or more, 12.0 (w/w)% or more, 12.5 (w/w)% or more, 13.0 (w/w)% or more, 13.5 (w/w)% or more, 14.0 (w/w)% or more, 14.5 (w/w)% or more, 15.0 (w/w)% or more, 15.5 (w/w)% or more, 16.0 (w/w)% or more, 16.5 (w/w)% or more, 17.0 (w/w)% or more, 17.5 (w/w)% or more, 18.0 (w/w)% or more, 18.5 (w/w)% or more, 19.0 (w/w)% or more, 19.5 (w/w)% or more, 20.0 (w/w)% or more, 20.5 (w/w)% or more, 21.0 (w/w)% or more, 21.5 (w/w)% or more, 22.0 (w/w)% or more, 22.5 (w/w)% or more, 23.0 (w/w)% or more, 23.5 (w/w)% or more, 24.0 (w/w)% or more, 24.5 (w/w)% or more, 25.0 (w/w)% or more, 25.5 (w/w)% or more, 26.0 (w/w)% or more, 26.5 (w/w)% or more, 27.0 (w/w)% or more, 27.5 (w/w)% or more, 28.0 (w/w)% or more, 28.5 (w/w)% or more, 29.0 (w/w)% or more, 29.5 (w/w)% or more, 30.0 (w/w)% or more, 30.5 (w/w)% or more, or 31.0 (w/w)% or more, and may be 40.0 (w/w)% or less, 37.0 (w/w)% or less, 35.0 (w/w)% or less, 32.0 (w/w)% or less, 30.0 (w/w)% or less, 29.0 (w/w)% or less, 28.0 (w/w)% or less, 27.0 (w/w)% or less, 26.0 (w/w)% or less, 25.0 (w/w)% or less, 24.0 (w/w)% or less, 23.0 (w/w)% or less, 22.0 (w/w)% or less, 21.0 (w/w)% or less, 20.0 (w/w)% or less, 19.5 (w/w)% or less, 19.0 (w/w)% or less, 18.5 (w/w)% or less, 18.0 (w/w)% or less, 17.5 (w/w)% or less, 17.0 (w/w)% or less, 16.5 (w/w)% or less, 16.0 (w/w)% or less, 15.5 (w/w)% or less, 15.0 (w/w)% or less, 14.5 (w/w)% or less, 14.0 (w/w)% or less, 13.5 (w/w)% or less, 13.0 (w/w)% or less, 12.5 (w/w)% or less, 12.0 (w/w)% or less, 11.5 (w/w)% or less, 11.0 (w/w)% or less, 10.5 (w/w)% or less, 10.0 (w/w)% or less, 9.5 (w/w)% or less, 9.0 (w/w)% or less, 8.5 (w/w)% or less, 8.0 (w/w)% or less, 7.5 (w/w)% or less, 7.0 (w/w)% or less, 6.5 (w/w)% or less, 6.0 (w/w)% or less, 5.5 (w/w)% or less, 5.0 (w/w)% or less, 4.5 (w/w)% or less, 4.0 (w/w)% or less, 3.5 (w/w)% or less, 3.0 (w/w)% or less, 2.5 (w/w)% or less, 2.0 (w/w)% or less, 1.5 (w/w)% or less, or 1.0 (w/w)% or less.

The real extract concentration can be measured by the method described in "8.4.3 Alcolyzer method" in Revised BCOJ Beer Analysis Method, Enlarged and Revised Edition of 2013 (edited by [Analysis Committee] Brewery Convention of Japan, Brewers Association of Japan, published by Public Interest Incorporated Foundation, Brewing Society of Japan).

The real extract concentration can be adjusted by appropriately setting the addition of diluting water or carbonated water, the types of raw materials (such as malt, corn grits, and sugar solution), the pulverized grain size of malt, the pulverization mode of malt (such as wet pulverization and dry pulverization), the humidity at the time of pulverization of malt (extent of humidity adjustment), the temperature at the time of pulverization, the type of mill used at the time of pulverization, the amounts of raw materials, the type of enzyme, the amount of enzyme added, the timing of enzyme addition, the enzyme decomposition time, the saccharification time in a preparation tank, the time for proteolysis in the preparation tank, the pH in the preparation tank, the pH in a preparation step (wort production step from feeding of malt until before addition of yeast), the amount of the acid to be added used in the pH adjustment, the timing of the pH adjustment (such as at the time of preparation, fermentation. or completion of fermentation, before beer filtration, and after beer filtration), the set temperature and holding time in each temperature region in preparation of wort (including during saccharification), the wort filtration time, the temperature during the wort filtration, the pH during the wort filtration, the wort collection amount in the wort filtration, the amount of sparging water during the wort filtration, the pH of sparging water during the wort filtration, the temperature of sparging water during the wort filtration, the fermentation conditions (such as the oxygen concentration, aeration conditions, yeast species, amount of yeast added, the number of yeast grown, the removal timing of yeast, fermentation temperature, fermentation time, pressure setting, and carbon dioxide concentration), the addition of a spirit, a distilled alcohol or the like, and the like.

In the beer-flavored beverage according to an aspect of the present invention, from the viewpoint of providing a high alcohol beer-flavored beverage excellent in balance between the effect of suppressing unpleasant bitterness and pleasant drinking sensation while having an appropriate alcohol stimulus feeling, a ratio [maltotetraose concentration/real extract concentration] of the maltotetraose concentration (unit: g/100 mL) to the real extract concentration (unit: (w/w)%) may be 0.060 or more, 0.080 or more, 0.100 or more, 0.150 or more, 0.200 or more, 0.250 or more, 0.300 or more, 0.350 or more, 0.400 or more, 0.450 or more, 0.500 or more, 0.550 or more, 0.600 or more, 0.650 or more, 0.700 or more, 0.750 or more, 0.800 or more, 0.850 or more, 0.900 or more, 0.950 or more, 1.000 or more, 1.100 or more, 1.200 or more, 1.300 or more, 1.400 or more, 1.500 or more, 1.600 or more, 1.700 or more, 1.800 or more, 1.900 or more, 2.000 or more, 2.200 or more, 2.400 or more, 2.600 or more, 2.800 or more, 3.000 or more, 3.200 or more, 3.400 or more, 3.600 or more, 3.800 or more, 4.000 or more, 4.200 or more, 4.400 or more, 4.600 or more, 4.800 or more, or 5.000 or more, and may be 5.000 or less, 4.800 or less, 4.600 or less, 4.400 or less, 4.200 or less, 4.000 or less, 3.800 or less, 3.600 or less, 3.400 or less, 3.200 or less, 3.000 or less, 2.800 or less, 2.600 or less, 2.400 or less, 2.200 or less, 2.000 or less, 1.900 or less, 1.800 or less, 1.700 or less, 1.600 or less, 1.500 or less, 1.400 or less, 1.300 or less, 1.200 or less, 1.100 or less, 1.000 or less, 0.950 or less, 0.900 or less, 0.850 or less, 0.800 or less, 0.750 or less, 0.700 or less, 0.650 or less, 0.600 or less, 0.550 or less, 0.500 or less, 0.450 or less, 0.400 or less, 0.350 or less, 0.300 or less, 0.250 or less, 0.200 or less, 0.150 or less, 0.100 or less, 0.900 or less, 0.800 or less, 0.700 or less, 0.600 or less, 0.500 or less, 0.400 or less, 0.300 or less, 0.200 or less, 0.100 or less, 0.090 or less, 0.080 or less, or 0.070 or less.

In the beer-flavored beverage according to an aspect of the present invention, from the viewpoint of providing a high alcohol beer-flavored beverage excellent in balance between the effect of suppressing unpleasant bitterness and pleasant drinking sensation while having an appropriate alcohol stimulus feeling, a ratio [real extract concentration/alcohol content] of the real extract concentration (unit: (w/w)%) to the alcohol content (unit: (v/v)%) may be 0.005 or more, 0.007 or more, 0.01 or more, 0.03 or more, 0.05 or more, 0.10 or more, 0.15 or more, 0.20 or more, 0.25 or more, 0.30 or more, 0.32 or more, 0.35 or more, 0.37 or more, 0.40 or more, 0.42 or more, 0.45 or more, 0.47 or more, 0.50 or more, 0.52 or more, 0.55 or more, 0.57 or more, 0.60 or more, 0.62 or more, 0.65 or more, 0.67 or more, 0.70 or more, 0.72 or more, 0.75 or more, 0.77 or more, 0.80 or more, 0.82 or more, 0.85 or more, 0.87 or more, 0.90 or more, 0.92 or more, 0.95 or more, 0.97 or more, 1.00 or more, 1.02 or more, 1.05 or more, 1.07 or more, 1.10 or more, 1.12 or more, 1.15 or more, 1.17 or more, 1.20 or more, 1.22 or more, 1.25 or more, 1.27 or more, 1.30 or more, 1.32 or more, 1.35 or more, 1.37 or more, 1.40 or more, 1.42 or more, 1.45 or more, 1.47 or more, 1.50 or more, 1.52 or more, 1.55 or more, 1.57 or more, 1.60 or more, 1.62 or more, 1.65 or more, 1.67 or more, or 1.70 or more, and may be 5.00 or less, 4.50 or less, 4.00 or less, 3.50 or less, 3.00 or less, 2.80 or less, 2.50 or less, 2.30 or less, 2.00 or less, 1.90 or less, 1.80 or less, 1.70 or less, 1.60 or less, 1.50 or less, 1.40 or less, 1.30 or less, 1.20 or less, 1.10 or less, or 1.00 or less, 0.90 or less, 0.80 or less, 0.70 or less, 0.60 or less, 0.50 or less, 0.40 or less, 0.30 or less, 0.20 or less, 0.10 or less, 0.08 or less, 0.06 or less, 0.04 or less, 0.03 or less, 0.01 or less, 0.007 or less, or 0.005 or less.

In the beer-flavored beverage according to an aspect of the present invention, a bitterness value may be, from the viewpoint of providing a high alcohol beer-flavored beverage having suitable sobering feeling, 1.0 BUs or more, 2.0 BUs or more, 3.0 BUs or more, 5.0 BUs or more, 7.0 BUs or more, 10.0 BUs or more, 12.0 BUs or more, 15.0 BUs or more, 17.0 BUs or more, 20.0 BUs or more, 22.0 BUs or more 25.0 BUs or more, 27.0 BUs or more, 30.0 BUs or more, 32.0 BUs or more, 35.0 BUs or more, 37.0 BUs or more, or 40.0 BUs or more, and 500 BUs or less, 450 BUs or less, 400 BUs or less, 350 BUs or less, 300 BUs or less, 270 BUs or less, 250 BUs or less, 220 BUs or less, 200 BUs or less, 190 BUs or less, 180 BUs or less, 170 BUs or less, 160 BUs or less, 150 BUs or less, 140 BUs or less, 130 BUs or less, 120 BUs or less, 110 BUs or less, 100 BUs or less, 95 BUs or less, or 90 BUs or less.

When the beer-flavored beverage according to an aspect of the present invention does not use hop as a raw material, the bitterness value may be less than 7.0 BUs, less than 6.0 BUs, less than 5.0 BUs, less than 4.0 BUs, less than 3.0 BUs, less than 2.0 BUs, less than 1.0 BUs, less than 0.5 BUs, or less than 0.1 BUs.

In the present specification, the "bitterness value" of the beverage can be measured by the measurement method described in "8.15 Bitterness Value" in Revised BCOJ Beer Analysis Method (published by Public Interest Incorporated Foundation, The Brewing Society of Japan, edited by Analysis Committee, Brewery Convention of Japan, Brewers Association of Japan, Enlarged and Revised Edition of 2013).

The bitterness value of the beer-flavored beverage according to an aspect of the present invention is an index of the bitterness imparted by a hop-derived component containing isohumulone as a main component, and can be controlled by, for example, appropriately adjusting the type, amount, and addition timing of hops.

In the beer-flavored beverage according to an aspect of the present invention, the sugar content may be 0.5 g/100 mL or more, 0.6 g/100 mL or more, 0.7 g/100 mL or more, 0.8 g/100 mL or more, 0.9 g/100 mL or more, 1.0 g/100 mL or more, 1.1 g/100 mL or more, 1.2 g/100 mL or more, 1.3 g/100 mL or more, 1.4 g/100 mL or more, 1.5 g/100 mL or more, 1.6 g/100 mL or more, 1.7 g/100 mL or more, 1.8 g/100 mL or more, 1.9 g/100 mL or more, or 2.0 g/100 mL or more, and may be 5.0 g/100 mL or less, 4.7 g/100 mL or less, 4.5 g/100 mL or less, 4.2 g/100 mL or less, 4.0 g/100 mL or less, 3.9 g/100 mL or less, 3.8 g/100 mL or less, 3.7 g/100 mL or less, 3.6 g/100 mL or less, 3.5 g/100 mL or less, 3.4 g/100 mL or less, 3.3 g/100 mL or less, 3.2 g/100 mL or less, 3.1 g/100 mL or less, or 3.0 g/100 mL or less.

Note that the sugar content can be adjusted by appropriately setting the addition of diluting water or carbonated water, the types of raw materials (such as malt, corn grits, and sugar solution), the amounts of raw materials, the type of enzyme, the amount of enzyme added (also including a saccharolytic enzyme or an isomerase), the timing of enzyme addition, the saccharification time, the pH during saccharification, the pH in the preparation step (wort production step from feeding of malt until before addition of yeast), the time for wort filtration, the set temperature and holding time in each temperature region in preparation of wort (including during saccharification), the original extract concentration in the pre-fermentation liquid, the original extract concentration in the fermentation step, the fermentation conditions (such as the oxygen concentration, aeration conditions, yeast species, amount of yeast added, the number of yeast grown, removal timing of yeast, fermentation temperature, fermentation time, pressure setting, carbon dioxide concentration, amount of enzyme added, type of enzyme, and addition timing of enzyme), and the like.

In addition, the "sugar" in the present specification refers to a sugar based on the Nutrition Labeling Standards for Foods (Ministry of Health, Labour and Welfare Notification No. 176, 2003, Consumer Affairs Agency Notification No. 8, Partial Revision, September 27, 2013) and specifically means a material in which protein, lipid, dietary fiber, ash, alcohol content, and water have been removed from the target food. Thus, the amount of sugar in a food can be calculated by subtracting the amounts of protein, lipid, dietary fiber, ash, and water from the weight of the food.

Here, the amounts of protein, lipid, dietary fiber, ash, and water can be measured by the methods described in the Nutrition Labeling Standards. Specifically, the amount of protein can be measured by a method of quantitative conversion of nitrogen, the amount of lipid can be measured by an ether extraction method, the amount of dietary fiber can be measured by the Prosky method, the amount of ash can be measured by a direct ashing method, and the amount of water can be measured by a method of heating and drying under reduced pressure.

In the beer-flavored beverage according to an aspect of the present invention, an apparent fermentation degree may be 56% or more, 58% or more, 60% or more, 62% or more, 65% or more, 67% or more, 70% or more, 72% or more, 75% or more, 77% or more, 80% or more, 82% or more, 85% or more, 87% or more, 90% or more, 92% or more, 95% or more, 97% or more, 100% or more, or 105% or more, and may be 120% or less, 119% or less, 118% or less, 117% or less, 116% or less, 115% or less, 114% or less, 113% or less, 112% or less, 111% or less, or 110% or less.

Note that the apparent fermentation degree can be adjusted by appropriately setting the addition of diluting water or carbonated water, the types of raw materials (such as malt, corn grits, and sugar solution), the amounts of raw materials, the type of enzyme, the amount of enzyme added (also including a saccharolytic enzyme or an isomerase), the temperature in enzymatic reaction, the timing of enzyme addition, the saccharification time, the pH during saccharification, the temperature during saccharification, the pH in the preparation step (wort production step from feeding of malt until before addition of yeast), the temperature in the preparation step, the time for wort filtration, the set temperature and holding time in each temperature region in preparation of wort (including during saccharification), the original extract concentration in the pre-fermentation liquid, the original extract concentration in the fermentation step, the fermentation conditions (such as the oxygen concentration, aeration conditions, yeast species, amount of yeast added, the number of yeast grown, removal timing of yeast, fermentation temperature, fermentation time, pressure setting, carbon dioxide concentration, amount of enzyme added, type of enzyme, and timing of enzyme addition), and the like.

In the present specification, the "apparent fermentation degree" means the proportion of the concentration of sugar that can be consumed by yeast as a nutrient source for alcoholic fermentation to the total concentration of sugar contained in the pre-fermentation liquid. For example, the apparent fermentation degree AA of the beer-flavored beverage can be calculated from Equation (1) below.

$$\text{Equation (1): AA (\%)} = 100 \times (P - Es)/P$$

In Equation (1) set forth above, "P" is an original extract (original wort extract), and can be measured by the method described in the "BCOJ Beer Analysis Method" (published by The Brewing Society of Japan, edited by Brewers Association of Japan, Revised on November 1, 2004).

"Es" represents an apparent extract of the beer-flavored beverage. The apparent extract can be calculated, for example, from Equation (2) set forth below as described in the "BCOJ Beer Analysis Method" (published by The Brewing Society of Japan, edited by Brewers Association of Japan, Revised on November 1, 2004).

$$\text{Equation (2): Es} = -460.234 + 662.649 \times D - 202.414 \times D2$$

In Equation (2), D is the specific gravity of a degassed beer-flavored beverage.

The apparent extract "Es" may have a negative value depending on D in Equation (2), and thus the calculated apparent fermentation degree may be more than 100%.

The malt proportion of the beer-flavored beverage according to an aspect of the present invention may be 5 mass% or more, 10 mass% or more, 20 mass% or more, 30 mass% or more, 40 mass% or more, 50 mass% or more, 55 mass% or more, 60 mass% or more, 65 mass% or more, 66 mass% or more, more than 66 mass%, 67 mass% or more, 70 mass% or more, 75 mass% or more, 80 mass% or more, 85 mass% or more, 90 mass% or more, 95 mass% or more, or 100 mass%, and may be 100 mass% or less, less than 100 mass%, 98 mass% or less, 95 mass% or less, 90 mass% or less, 85 mass% or less, 80 mass% or less, 75 mass% or less, 70 mass% or less, 68 mass% or less, 67 mass% or less, or 66 mass% or less.

In the present specification, the "malt proportion" means a value calculated according to the Interpretation Notice on the Liquor Tax Law and the Administrative Ordinance Related to Alcoholic Beverages and the like enforced on April 1, 2018.

Note that in a case of suppressing the malt proportion, it is preferable to increase amounts of raw materials (carbon source and nitrogen source) other than malt, which can be utilized by yeast. Examples of carbon sources as the yeast assimilable raw material include monosaccharides, disaccharides, trisaccharides, and sugar solutions thereof; examples of nitrogen sources as the yeast assimilable raw material include yeast extracts, soybean proteins, malt, soybeans, yeast extracts, peas, wheat malt, ungerminated cereal grains, and decomposition products thereof. Examples of the ungerminated grains include barley, wheat, rye, common wild oat, oat, adlay, rice (such as white rice and brown rice), corn, kaoliang, potato, legumes (such as soybean and pea), buckwheat, sorghum, foxtail millet, and Japanese millet, which are ungerminated. In addition, starches collected from these grains and extracts thereof may be used.

The beer-flavored beverage according to an aspect of the present invention may be beer.

In the present specification, the "beer" means a beverage produced by using malt, hops, and water as raw materials and fermenting them with yeast, and specifically means one defined by the Interpretation Notice on the Liquor Tax Law and the Administrative Ordinance Related to Alcoholic Beverages and the like enforced on April 1, 2018.

That is, in a case where the beer-flavored beverage according to an aspect of the present invention is beer, the alcohol content is adjusted by the fermentation step using yeast.

The color of the beer-flavored beverage according to an aspect of the present invention is not particularly limited, and may be amber or golden like ordinary beer, black like dark beer, or colorless and transparent, or may be colored as desired by adding a coloring agent or the like. The color of the beer-flavored beverage can be determined by the naked eye, but may be defined by the total light transmittance, chromaticity, or the like.

The chromaticity of the beer-flavored beverage according to an aspect of the present invention may be 0.5 EBC or more, 1.0 EBC or more, 2.0 EBC or more, 3.0 EBC or more, 5.0 EBC or more, 7.0 EBC or more, 10 EBC or more, 15 EBC or more, 20 EBC or more, 25 EBC or more, 30 EBC or more, 35 EBC or more, 40 EBC or more, 45 EBC or more, 50 EBC or more, 55 EBC or more, 60 EBC or more, 65 EBC or more, 70 EBC or more, 75 EBC or more, 80 EBC or more, 85 EBC or more, 90 EBC or more, 95 EBC or more, 100 EBC or more, 105 EBC or more, 110 EBC or more, 115 EBC or more, 120 EBC or more, 125 EBC or more, 130 EBC or more, 135 EBC or more, 145 EBC or more, or 150 EBC or more, and may be 500 EBC or less, 450 EBC or less, 400 EBC or less, 350 EBC or less, 300 EBC or less, 270 EBC or less, 250 EBC or less, 240 EBC or less, 230 EBC or less, 220 EBC or less, 210 EBC or less, 200 EBC or less, 190 EBC or less, 180 EBC or less, 170 EBC or less, 160 EBC or less, 155 EBC or less, 150 EBC or less, 145 EBC or less, 140 EBC or less, 135 EBC or less, 130 EBC or less, 125 EBC or less, 120 EBC or less, 115 EBC or less, 110 EBC or less, 105 EBC or less, 100 EBC or less, 95 EBC or less, 90 EBC or less, 85 EBC or less, 80 EBC or less, 75 EBC or less, or 70 EBC or less.

In the present specification, the "chromaticity" of the beverage can be measured by the measurement method described in "8.8 Chromaticity" in Revised BCOJ Beer Analysis Method (published by Public Interest Incorporated Foundation, The Brewing Society of Japan, edited by [Analysis Committee] Brewery Convention of Japan, Brewers Association of Japan, Enlarged and Revised Edition of 2013). Note that the "chromaticity" of the beverage is specified by the unit of chromaticity (EBC unit) defined by the European Brewery Convention. A beverage with a smaller numerical value has a lighter and brighter color, whereas a beverage with a larger numerical value has a deeper and darker color.

In addition, the chromaticity of the beer-flavored beverage according to an aspect of the present invention can be controlled, for example, by appropriately adjusting the type of malt used, the blending proportion in a case of using two or more types of malts in combination, or the boiling conditions for preparation of the pre-fermentation liquid. More specifically, for example, to increase the chromaticity of the beer-flavored beverage, the chromaticity can be adjusted by increasing the blending proportion of dark malt as the malt, increasing the temperature during boiling treatment, increasing boiling time, performing decoction during preparation of a saccharified liquid, adding a colorant such as caramel pigment, and the like. Further, the chromaticity can also be adjusted to a higher level by increasing the original wort extract concentration or increasing the malt proportion.

The pH of the beer-flavored beverage according to an aspect of the present invention is preferably 2.0 or more, 2.2 or more, 2.4 or more, 2.6 or more, 2.8 or more, 3.0 or more, 3.1 or more, 3.2 or more, 3.3 or more, 3.4 or more, 3.5 or more, 3.6 or more, 3.7 or more, 3.8 or more, 3.9 or more, or 4.0 or more, and preferably 5.4 or less, 5.2 or less, 5.0 or less, 4.9 or less, 4.8 or less, 4.7 or less, 4.6 or less, 4.55 or less, or 4.5 or less.

The beer-flavored beverage of an aspect of the present invention only needs to be a mode in which the beverage is filled in a container, and examples of the container include a bottle, a PET bottle, a can, and a barrel. In particular, from the viewpoint of easy portability, the container is preferably a can, a bottle, or a PET bottle.

1.1 Raw material

As the main raw material of the beer-flavored beverage of an aspect of the present invention, malt may be used together with water, or malt does not need to be used. Furthermore, the beer-flavored beverage according to an aspect of the present invention may be a beverage using hops as a raw material, or may be a beverage not using hops.

Besides, a preservative, a sweetener, a water-soluble dietary fiber, a bittering agent or bitterness-imparting agent, an antioxidant, a flavoring, an acidulant, a salt, and/or the like may be used.

### 1.1.1 Malt, grain other than malt

In a case where malt is used as the raw material, the malt refers to malt prepared by germinating seeds of barley or the like, such as barley, wheat, rye, common wild oat, oat, or adlay, drying the germinated seeds, and removing roots, and may be from any production area and of any variety. As malt used for the beer-flavored beverage, only malt may be used, or malt and ungerminated wheat and barley may be used in combination.

The malt used in an aspect of the present invention is preferably barley malt. Barley malt is one of the malts most commonly used as a raw material for Japanese beer-flavored beverages. Examples of barley include two-rowed barley and six-rowed barley, and any of them may be used. Furthermore, besides normal malts, colored malts and the like can also be used. When colored malt is used, different types of colored malts may be appropriately used in combination, or one colored malt may be used.

The malt used in an aspect of the present invention preferably has a modification of 80% or more. When the modification is less than 80%, the viscosity of the wort increases or the turbidity thereof increases, and the production efficiency such as wort filterability or beer filterability deteriorates. Therefore, malt having a modification of 80% or more is preferably used. In Examples and Comparative Examples which will be described below, malt having a modification of 80% or more was used. The modification can be measured by the method described in 3.1.3.8 Modification and Homogeneity (Calcofluor Carlsberg Method-EBC) in MEBAK Raw Materials Barley Adjuncts Malt Hops And Hop Products Published by the Chairman Dr. Fritz Jacob Self-published by MEBAK 85350 Freising-Weihenstephan, Germany 2011.

Note that in the beer-flavored beverage according to an aspect of the present invention, the malt to be used is preferably selected as appropriate in accordance with the desired chromaticity of the beer-flavored beverage, and the malt to be selected may be used alone or in combination of two or more kinds thereof.

In addition to or instead of malt, a grain other than malt may be used.

Examples of such a grain include barley and the like that do not fall under malt (such as barley, wheat, rye, common wild oats, oats, and adlay), rice (such as white rice and brown rice), corn, kaoliang, potato, legumes (such as soybeans and peas), buckwheat, sorghum, foxtail millet, Japanese millet, starch resulting therefrom, and extracts thereof.

Note that in a case of suppressing the malt proportion or not using malt, it is preferable to increase amounts of raw materials (carbon source and nitrogen source) other than malt, which can be utilized by yeast. Examples of the carbon source of the yeast-assimilable raw material include monosaccharides, disaccharides, trisaccharides, and sugar solutions thereof, and examples of the nitrogen source include yeast extract, amino acid-containing materials (such as soybean protein), soybean, yeast extract, pea, wheat malt, ungerminated grains, and decomposition products thereof.

The fruit, pericarp, bark, leaf, flower, stem, root, and seed of a plant other than plants of the Gramineae family such as barley, which can be used as a raw material, can be appropriately selected.

Specific examples of the plant other than plants of the Gramineae family include citrus fruits, soft fruits, herbs, and spices. Examples of the citrus fruits include an orange, Citrus junos, a lemon, a lime, a mandarin orange, a grapefruit, Citrus Iyo Group, Citrus japonica, Citrus sphaerocarpa, Citrus limetta 'Daidai', Citrus depressa, and Citrus sudachi.

Examples of the soft fruits include a peach, a grape, a banana, an apple, a grape, a pineapple, a strawberry, a pear, a muscat, and a blackcurrant. Examples of the herbs and the spices include coriander, pepper, fennel, Sichuan pepper, zanthoxyli fructus, cardamom, caraway, nutmeg, mace, juniper berry, allspice, vanilla, elderberry, grains of paradise, anise, and star anise.

These may be used as they are, may be used after being crushed, may be used in the form of an extract derived by extraction with an extraction solvent such as water or ethanol, or may be used after being squeezed (fruit juice or the like). One of these herbs and spices may be used alone, or two or more thereof may be used in combination.

The above can be used as appropriate in accordance with the gusto of consumers, but in order to enjoy a clear and refreshing taste like beer, it is preferable that the above citrus fruits, soft fruits, herbs, and spices be not used at all or used in a minimum amount as raw materials. In particular, a blackcurrant gives an inappropriate milky aroma in beer, and thus a blackcurrant or blackcurrant juice is preferably not used at all or used in a minimum amount in the raw material.

### 1.1.2 Hops

In a case of using hops in an aspect of the present invention, examples of the form of the hops include pellet hops, powdered hops, and hop extract. The hops used may be a processed hop product, such as isomerized hops or reduced hops.

In the case of using hops in an aspect of the present invention, the amount of hops to be added is appropriately adjusted but is preferably from 0.0001 to 1 mass% based on the total amount (100 mass%) of the raw materials for the beverage.

A beer-flavored beverage made using hops as a raw material is a beverage containing iso-$\alpha$-acid, which is a component derived from hops. The content of iso-$\alpha$-acid in the beer-flavored beverage made using hops may be more than 0.1 mass ppm or more than 1.0 mass ppm based on the total amount (100 mass%) of the beer-flavored beverage.

On the other hand, the content of iso-$\alpha$-acid in a beer-flavored beverage made without using hops may be 0.1 mass ppm or less based on the total amount (100 mass%) of the beer-flavored beverage.

In the present specification, the content of iso-$\alpha$-acid means a value measured by the high-performance liquid chromatography (HPLC) analysis method described in Revised BCOJ Beer Analysis Method (published by Public Interest Incorporated Foundation, The Brewing Society of Japan, edited by [Analysis Committee] Brewery Convention of Japan, Brewers Association of Japan, Enlarged and Revised Edition of 2013).

1.1.3 Preservative

The beer-flavored beverage according to an aspect of the present invention may be a beverage having a preservative.

Examples of the preservative used in an aspect of the present invention include benzoic acid; benzoate salts, such as sodium benzoate; benzoate esters, such as propyl parahydroxybenzoate and butyl parahydroxybenzoate; and dimethyl dicarbonate. For the preservative, a commercially available preparation, such as Kyohryoku Sanpurezah (Powerful Sanplezer) (a mixture of sodium benzoate and butyl benzoate, available from San-Ei Gen F.F.I., Inc.) may be used.

One of these preservatives may be used alone, or two or more of these preservatives may be used in combination.

In a case of blending a preservative in the beer-flavored beverage according to an aspect of the present invention, the content of the preservative is preferably 5 to 1200 mass ppm, more preferably 10 to 1100 mass ppm, still more preferably 15 to 1000 mass ppm, and even more preferably 20 to 900 mass ppm.

1.1.4 Sweetener

The beer-flavored beverage according to an aspect of the present invention contains 0.07 g/100 mL or more of maltotetraose, and may be a beverage obtained by further blending a sweetener.

Examples of the sweetener used in an aspect of the present invention include saccharified liquid in which starch derived from grain has been degraded with an acid, an enzyme, or the like; saccharides such as commercially available starch syrup; sucrose; tri- or higher saccharides; isomerized sugar; sugar alcohols; natural sweeteners, such as stevia; and artificial sweeteners.

One of these sweeteners may be used alone, or two or more of these sweeteners may be used in combination.

These saccharides may be in the form of a liquid, such as a solution, or a solid, such as a powder.

There are no particular limitations on the type of raw material grain for starch, the method of purifying starch, and the conditions for treatment, such as hydrolysis with an enzyme or an acid. For example, a saccharide may be used with the proportion of maltose increased by appropriately setting conditions for hydrolysis with an enzyme or an acid. In addition, sucrose, fructose, glucose, maltose, trehalose, maltotriose, isomaltose, isomaltotriose, isomaltotetraose, and solutions thereof (sugar solutions) can also be used.

Examples of the artificial sweetener include aspartame, acesulfame potassium (acesulfame K), sucralose, and neotame.

Examples of the water-soluble dietary fiber include indigestible dextrin, polydextrose, guar gum degradation products, pectin, glucomannan, alginic acid, laminarin, fucoidin, and carrageenan. From the viewpoint of versatility, such as stability and safety, indigestible dextrin or polydextrose is preferred.

The content of the dietary fiber may be adjusted within the above range by adding a commercially available product, or may be adjusted in the production process so that the content of dietary fiber derived from a raw material such as malt falls within the above range. In the case where a commercially available product is added, the powderiness unsuitable for beer-flavored beverages can be suppressed by adjusting the content of dietary fiber within the above-described range. In the case where the content of dietary fiber is adjusted in the production process, the content of dietary fiber is adjusted within the above range, and thus, for example, the filterability in wort filtration and beer filtration can be improved, and the production efficiencies can be increased.

When the content of dietary fiber is adjusted in the production process, the content of dietary fiber in the beer-flavored beverage according to an aspect of the present invention can be adjusted by adjusting the addition of dilution water or carbonated water, the types and amounts of raw materials (wheat, malt, corn, sugar solution, and the like), the type and amount of enzyme, the timing for addition of enzyme (during a saccharification step, before addition of yeast, after addition of yeast, during aging, or the like), and the set temperature, pH, and retention time of each temperature region in preparation of a saccharified liquid.

1.1.5 Bittering agent and bitterness-imparting agent

The beer-flavored beverage according to an aspect of the present invention may be a beverage further containing one or more selected from the group consisting of a bittering agent and a bitterness-imparting agent.

In the beer-flavored beverage according to an aspect of the present invention, the bitterness is preferably imparted by hops, and a bittering agent or a bitterness-imparting agent indicated below may be used together with hops. Alternatively, the bittering agent or bitterness-imparting agent indicated below may be used instead of hops without using hops.

The bittering agent or bitterness-imparting agent is not particularly limited, and a substance used as a bitterness-imparting agent in ordinary beer and low-malt beer can be used. Examples thereof include rosemary, litchi, caraway, juniper berry, sage, rosemary, Ganoderma sichuanense, bay laurel, quassin, caffeine, absinthin, naringin, Phellodendron amurense, citrus extract, bitter wood extract, coffee extract, tea extract, bitter gourd extract, lotus embryo extract, Aloe arborescens extract, rosemary extract, litchi extract, laurel extract, sage extract, caraway extract, Artemisia absinthium, absinthin, and alginic acid.

One of these bittering agents and bitterness-imparting agents may be used alone, or two or more thereof may be used in combination.

1.1.6 Antioxidant

The beer-flavored beverage according to an aspect of the present invention may be a beverage further containing an antioxidant.

The antioxidant is not particularly limited, and a substance used as an antioxidant in ordinary beer and low-malt beer can be used, and examples include ascorbic acid, erythorbic acid, and catechin.

One of these antioxidants may be used alone, or two or more thereof may be used in combination.

1.1.7 Flavoring

The beer-flavored beverage according to an aspect of the present invention may be a beverage further containing a flavoring.

The flavoring is not particularly limited, and a general beer flavoring can be used. The beer flavoring is used for imparting a beer-like flavor, and ester or higher alcohol can be used.

The content of the flavor component such as ester or higher alcohol can be adjusted by separately adding a flavoring containing these flavor components. However, when alcoholic fermentation is involved in the production process, the content may be adjusted by alcoholic fermentation without adding a flavoring or together with addition of a flavoring.

The content of the flavor component such as ester or higher alcohol in a case of involving alcoholic fermentation can be controlled by appropriately setting the addition of diluting water or carbonated water, the sugar composition and amino acid composition of the pre-fermentation liquid before addition of yeast, sugar concentration, amino acid concentration, original extract concentration in the pre-fermentation liquid, yeast species, fermentation conditions (such as oxygen concentration, aeration conditions, yeast species, amount of yeast added, the number of yeast grown, yeast removal timing, fermentation temperature, fermentation time, pressure setting, and carbon dioxide concentration), cooling timing, and the like.

1.1.8 Acidulant

The beer-flavored beverage according to an aspect of the present invention may be a beverage further containing an acidulant.

The acidulant is not particularly limited as long as it is a substance with a sour taste, and examples include tartaric acid, phosphoric acid, citric acid, gluconic acid, lactic acid, malic acid, phytic acid, acetic acid, succinic acid, glucono-delta-lactone, and salts thereof.

Among these, the acidulant is preferably at least one selected from tartaric acid, phosphoric acid, citric acid, gluconic acid, lactic acid, malic acid, phytic acid, acetic acid, succinic acid, and salts thereof, more preferably at least one selected from tartaric acid, phosphoric acid, citric acid, lactic acid, tartaric acid, acetic acid, and salts thereof, and still more preferably at least one selected from tartaric acid, phosphoric acid, and lactic acid.

One of these acidulants may be used alone, or two or more of these acidulants may be used in combination.

1.1.9 Salts

The beer-flavored beverage according to an aspect of the present invention may be a beverage further containing salts.

Examples of the salt include sodium chloride, acid potassium phosphate, acid calcium phosphate, ammonium phosphate, magnesium sulfate, calcium sulfate, potassium metabisulfite, calcium chloride, magnesium chloride, potassium nitrate, ammonium sulfate, potassium chloride, monosodium citrate, disodium citrate, and trisodium citrate.

One of these salts may be used alone, or two or more of these salts may be used in combination.

1.2 Carbon dioxide gas

As the carbon dioxide gas contained in the beer-flavored beverage according to an aspect of the present invention, carbon dioxide gas contained in a raw material may be used, or carbon dioxide gas may be dissolved by mixing with carbonated water, addition of carbon dioxide gas, or the like.

Note that the carbon dioxide gas generated in the fermentation step of the beer-flavored beverage can be used as it is, but the amount of the carbon dioxide gas may be adjusted by appropriately adding carbonated water.

The carbon dioxide gas concentration of the beer-flavored beverage according to an aspect of the present invention is preferably 0.30 (w/w)% or more, more preferably 0.35 (w/w)% or more, still more preferably 0.40 (w/w)% or more, even more preferably 0.42 (w/w)% or more, further more preferably 0.45 (w/w)% or more, still further more preferably 0.47 (w/w)% or more, and particularly preferably 0.50 (w/w)% or more, and preferably 0.80 (w/w)% or less, more preferably 0.70 (w/w)% or less, still more preferably 0.60 (w/w)% or less, even more preferably 0.57 (w/w)% or less, and particularly preferably 0.55 (w/w)% or less.

Note that, in the present specification, the carbon dioxide gas concentration can be measured in a process in which a container that contains a target beverage is immersed in a water tank at 20°C for 30 minutes or longer with being shaken from time to time so that the temperature of the beverage becomes 20°C and then the concentration is measured with a gas volume analyzer (e.g., GVA-500 (available from Kyoto Electronics Manufacturing Co., Ltd.) etc.).

In a case where the beer-flavored beverage according to an aspect of the present invention is a packaged beverage, the carbon dioxide gas pressure of the packaged beverage only needs to be appropriately adjusted such that the carbon dioxide gas concentration is in the ranges described above, and may be 5.0 kg/cm$^2$ or less, 4.5 kg/cm$^2$ or less, or 4.0 kg/cm$^2$ or less, and may be 0.20 kg/cm$^2$ or more, 0.50 kg/cm$^2$ or more, or 1.0 kg/cm$^2$ or more. Any of these upper and lower limits may be combined; for example, the carbon dioxide gas pressure of the beverage may be 0.20 kg/cm$^2$ or more and 5.0 kg/cm$^2$ or less, 0.50 kg/cm$^2$ or more and 4.5 kg/cm$^2$ or less, or 1.0 kg/cm$^2$ or more and 4.0 kg/cm$^2$ or less.

In the present specification, the gas pressure refers to the gas pressure in the container except in special cases.

The pressure can be measured by a method well-known to those skilled in the art, for example, using a method in which a sample adjusted to 20°C is fixed to a gas internal pressure meter, the stopcock of the gas internal pressure meter is opened once to release the gas, the stopcock is closed again, the gas internal pressure meter is shaken, and a value when the pointer reaches a certain position is read; or using a commercially available gas pressure measuring instrument.

1.3 Other additives

In the beer-flavored beverage according to an aspect of the present invention, various additives may be added as necessary to the extent that the effects of the present invention are not compromised.

Examples of such additives include coloring agents, foaming agents, fermentation accelerators, yeast extracts, protein-based substances such as peptide-containing substances, and seasonings such as amino acids.

The coloring agent is used to impart a beer-like color to the beverage, and a caramel dye or the like can be used. The foam-forming agent is used to form beer-like foam or to keep the foam of the beverage, and a plant-extracted saponin-based substance, such as soybean saponin and/or quillaja saponin; a plant protein, such as corn and/or soybean; a peptide-containing substance, such as a collagen peptide; a yeast extract; an emulsifiers (sucrose fatty acid ester, glycerin fatty acid ester, lecithin, and/or lysolecithin); and/or the like can be appropriately used.

The fermentation accelerator is used for promoting fermentation by yeasts, and examples thereof include a yeast extract, a bran component from such as rice and wheat, a vitamin, and a mineral agent. A single type of fermentation accelerator can be used alone or two or more types may be used in combination.

1.4 Packaged beverage

The beer-flavored beverage according to an aspect of the present invention may be a packaged beverage packaged in a container. For the packaged beverage, a container of any form and material may be used, and examples of the container include a bottle, a can, a barrel, or a PET bottle. In particular, from the viewpoint of easy portability, the container is preferably a can, a bottle, or a PET bottle.

2 Method for producing beer-flavored beverage

Examples of the method for producing a beer-flavored beverage according to an aspect of the present invention include a method including at least the following steps (a) and (b), and a method including the following step (c) is preferable.

· Step (a): a step of adjusting an alcohol content of the beer-flavored beverage to 10.0 (v/v)% or more.
· Step (b): a step of adjusting the maltotetraose concentration of the beer-flavored beverage to 0.007 g/100 mL or more.
· Step (c): a step of adjusting the real extract concentration of the beer-flavored beverage to 0.5 (w/w)% or more and 40.0 (w/w)% or less.

Note that the order of steps (a) to (c) is not particularly limited.

The method for producing a beer-flavored beverage according to an aspect of the present invention is not particularly limited, and may be a method for producing a beer-flavored beverage through a fermentation step or may be a method for producing a beer-flavored beverage without a fermentation step.

Hereinafter, a method for producing a fermented beer-flavored beverage through a fermentation step and a method for producing a non-fermented beer-flavored beverage without a fermentation step will be described.

2.1 Method for producing fermented beer-flavored beverage

As the method for producing a fermented beer-flavored beverage according to an aspect of the present invention, a method through a fermentation step using yeast is exemplified and includes, for example, the following steps (1) to (2):

· Step (1): a step of performing at least one treatment of the group consisting of saccharification treatment, boiling treatment, and solid content removal treatment, using various raw materials to produce a pre-fermentation liquid; and
· Step (2): a step in which yeasts are added to the pre-fermentation liquid to allow fermentation.

In the method for producing a fermented beer-flavored beverage according to an aspect of the present invention, the above steps (a) to (c) and adjustment of the total polyphenol amount, the bitterness value, and the pH can be performed at any one or more timings of the following (a) to (u). In a case where the steps (a) to (c) and the adjustment described above can be performed at the same time by performing the steps (1) and (2), it is not necessary to separately perform these steps.

· (a): simultaneously with at least one of step (1) and step (2)
· (i): between step (1) and step (2)
· (u): after step (2)

The step (a) may be performed by blending spirits and the like after the step (2) as necessary while being performed in the fermentation step of the step (2).

The step (b) may be performed by adding a dietary fiber, a saccharide (starch, sweetener, carbohydrate, and the like), and the like after the step (2) as necessary while being performed in the steps (1) and (2).

The step (c) may be performed by adding collagen and the like after the step (2) as necessary while being performed in the steps (1) and (2).

Hereinafter, each step of the method for producing a fermented beer-flavored beverage according to an aspect of the present invention will be described.

2.1.1 Step (1)

Step (1) is a step of performing at least one treatment of the group consisting of saccharification treatment, boiling treatment, and solid content removal treatment, using various raw materials to produce a pre-fermentation liquid.

For example, in a case of using malt as a raw material, various raw materials including water and malt are fed in a preparation kettle or a preparation tank, and an enzyme such as amylase is added as necessary. Examples of various raw materials that may be added besides malt include hops, a preservative, a sweetener, a water-soluble dietary fiber, a bittering agent or bitterness-imparting agent, an antioxidant, a flavoring, an acidulant, a pigment, and/or the like. These raw materials may be added before performing the saccharification treatment, during the saccharification treatment, or after completion of the saccharification treatment. In addition, these raw materials may be added after the fermentation in the next step.

A mixture of the various raw materials is heated to saccharify the starch of the raw materials to perform saccharification treatment.

The temperature and time of the saccharification treatment are preferably appropriately adjusted in view of the type of malt used, the malt proportion, raw materials besides water and malt, the type and amount of the enzyme used, the original wort extract concentration of the finally resulting beverage, and the like. In an aspect of the present invention, from the viewpoint of adjusting the sugar concentration and turbidity of the beer-flavored beverage to the above ranges, the temperature of the saccharification treatment is preferably from 55 to 75°C, and the time of the saccharification treatment is preferably from 30 to 240 minutes.

The saccharified liquid is preferably subjected to boiling treatment.

In case where hops, a bittering agent, and the like are used as raw materials, they are preferably added at the time when this boiling treatment is carried out. Hops, a bittering agent, and/or the like may be added between the start of boiling the saccharified liquid and before the completion of the boiling.

After completion of the boiling treatment, it is preferable that the liquid be transferred to a whirlpool and cooled to 0 to 23°C to form a cooled liquid, and then a treatment for removing a solid content such as coagulated protein be performed. With this treatment, the original wort extract concentration can be adjusted to the above range. In this way, a pre-fermentation liquid is prepared.

Note that in this step, there may be performed a filtration through a filter having a predetermined pore diameter (e.g., a pore diameter less than 30 μm) to perform a process for removing a solid content.

In place of the saccharified liquid, a malt extract added with hot water may be used, and this liquid is added with hops, a bittering agent and the like and then subjected to boiling treatment to prepare a pre-fermentation liquid.

In addition, in the case of not using malt, a pre-fermentation liquid may be prepared by mixing, as the raw materials, a liquid sugar containing a carbon source; a nitrogen source as an amino acid-containing raw material other than barley and the like or malt; hops; a dietary fiber; a preservative; a sweetener; an antioxidant; a bitterness-imparting agent; a flavoring; an acidulant; a pigment; and/or the like together with warm water to prepare a liquid sugar solution, and boiling the liquid sugar solution.

In the case of using hops, it may be added before the boiling treatment or may be added between the start of boiling the liquid sugar solution and before the completion of the boiling.

2.1.2 Step (2)

Step (2) is a step in which yeasts are added to the pre-fermentation liquid obtained in step (1) to perform fermentation.

The yeast used in this step can be appropriately selected in view of the type of the fermented beverage to be produced, the target flavor, the fermentation conditions, and the like, and top-fermenting yeast may be used, or bottom-fermenting yeast may be used.

The yeast in the form of a yeast suspension as is may be added to the raw material liquid, or a slurry produced by concentrating the yeast by centrifugation or sedimentation may be added to the stock solution. Alternatively, a material obtained by completely removing the supernatant after the centrifugation may be added. The amount of yeast added to the stock solution can be appropriately set and is, for example, approximately from $5.0 \times 10^6$ cells/mL to $1.0 \times 10^9$ cells/mL.

Although the fermentation conditions in performing fermentation can be set as appropriate, the fermentation temperature is preferably from 5 to 25°C from the viewpoint of adjusting the alcohol content and the sugar concentration of the beer-flavored beverage to the ranges described above. The alcohol content and the sugar concentration of the beer-flavored beverage can be adjusted by appropriately setting the type, amount, and timing of addition of the polysaccharide-degrading enzyme such as transglucosidase. They can be also adjusted by changing the temperature (temperature increase or temperature decrease) or pressure of the fermented liquid during the fermentation step as necessary.

After the fermentation, filtration treatment for removing yeast in the beer-flavored beverage may be performed, or filtration treatment does not need to be performed. In addition, water or the above-described various additives may be added as necessary.

The beer-flavored beverage thus produced according to an aspect of the present invention is filled in a predetermined container and distributed to the market as a product.

The method of packaging the beer-flavored beverage is not particularly limited, and a packaging method known to those skilled in the art can be used. Through the packaging step, the beer-flavored beverage according to the present invention is filled and sealed in a container. In the packaging step, a container of any form and material may be used, and examples of the container include containers described in "1.4 Packaged beverage".

2.2 Method for producing non-fermented beer-flavored beverage

A method for producing a non-fermented beer-flavored beverage according to an aspect of the present invention only needs to be a method without the fermentation step, and includes, for example, the following steps (i) to (ii).

· Step (i): a step of performing at least one treatment of saccharification treatment, boiling treatment, or solid content removal treatment on a raw material to obtain a pre-beverage liquid.
· Step (ii): a step in which the pre-beverage liquid obtained in the step (i) is cooled and carbon dioxide gas is added thereto.

The step (i) is the same as the step of producing a pre-fermentation liquid of the step (1) in the "method for producing a fermented beer-flavored beverage" described above.

As a method of adding carbon dioxide gas in the step (ii), carbon dioxide gas may be added by mixing the cooled pre-beverage liquid formed by cooling the pre-beverage liquid produced in the step (i) with carbonated water, or carbon dioxide gas may be directly added to the cooled beverage stock solution. At the same timing as the step (ii), additives such as a preservative, a sweetener, a flavoring, an acidulant, and a pigment may be added as necessary in adding carbon dioxide gas.

In the method for producing a non-fermented beer-flavored beverage according to an aspect of the present invention, it is preferable to perform the step (a) by blending spirits and the like at least after the step (i).

The step (a) may also be performed between the step (i) and the step (ii), or may be performed in the step (i) and the step (ii).

The steps (b) and (c) may also be performed between the step (i) and the step (ii), or may be performed in the step (i) and the step (ii).

The non-fermented beer-flavored beverage thus produced is filled in a predetermined container and distributed to the market as a product.

The method for packaging the non-fermented beer-flavored beverage is not particularly limited, and a packaging method known to those skilled in the art can be used. Through the packaging step, the non-fermented beer-flavored beverage is filled and sealed in a container. In the container filling step, a container of any form/material may be used, and examples of the container include those described above.

Examples

Hereinafter, the present invention will be described in more detail by examples, but the present invention is not limited by these examples.

Examples 1 to 10 and Comparative Examples 1 to 4

<Preparation of beverage>

Crushed barley malt was fed in a preparation tank containing 40 L of warm water kept at 40 to 55°C, then the temperature was raised to 78°C while the temperature was repeatedly raised and kept in a stepwise manner, then malt dregs were removed by filtration, and a saccharified liquid was produced. Next, hops were further added to the saccharified liquid, boiling was performed, and solid-liquid separation treatment was performed to produce clear wort. Then, brewer's yeast (bottom-fermenting yeast) was added to the pre-fermentation liquid formed by cooling the wort, and the fermentation temperature and the fermentation time were adjusted to perform alcoholic fermentation in such a manner to achieve a predetermined alcohol content. Then, the yeast was removed by filtration to obtain a fermented liquid. Then, maltotetraose, carbonated water, and/or spirits were added to the fermented liquid as necessary to produce a beer-flavored beverage. The produced beer-flavored beverage had a bitterness value of from 40 to 90 BUs, a sugar content of from 1.0 to 3.5 g/100 mL, a pH of from 4.2 to 4.7, and a carbon dioxide gas concentration of from 0.205 to 0.304 (w/w)%.

In each of the Examples and Comparative Examples, the alcohol content and the maltotetraose concentration were each adjusted to the value shown in Table 1 by appropriately setting the set temperature and the holding time of each temperature region, the amount of hop added, the fermentation temperature, the fermentation time, and the like when preparing the saccharified liquid, and adjusting the addition amount of maltotetraose, carbonated water, and/or spirits as necessary.

<Sensory evaluation>

Three panelists who had been regularly trained evaluated the beer-flavored beverages obtained in the Examples and Comparative Examples cooled to about 4°C for the "presence or absence of bitterness unsuitable for a beer-flavored beverage" and the "presence or absence of pleasant drinking sensation suitable for a beer-flavored beverage" of each beverage for testing by a score in a range of from 5.0 (maximum value) to 1.0 (minimum value) in increments of 0.5 based on the score criteria described below, and average values of the scores of the three panelists were calculated. The results are listed in Table 1.

In the evaluation, samples that meet the following criteria "5.0", "4.0", "3.0", "2.0", and "1.0" were prepared in advance to standardize the criteria among the panelists. In addition, in the sensory evaluation of all Table 1, for the same beverage, no difference in a score value of 1.5 or more was observed among the panelists.

[Score criteria for presence or absence of bitterness unsuitable for beer-flavored beverage]

· "5.0": Unsuitable bitterness is not perceived at all.
· "4.0": Unsuitable bitterness is hardly perceived.
· "3.0": Unsuitable bitterness is not generally perceived.
· "2.0": Unsuitable bitterness is strongly perceived.
· "1.0": Unsuitable bitterness is very strongly perceived.

[Score criteria for presence or absence of pleasant drinking sensation suitable for beer-flavored beverage]

· "5.0": The drinking sensation suitable for a beer-flavored beverage is very strongly perceived.

· "4.0": The drinking sensation suitable for a beer-flavored beverage is strongly perceived.

· "3.0": The drinking sensation suitable for a beer-flavored beverage is sufficiently perceived.

· "2.0": The drinking sensation suitable for a beer-flavored beverage is hardly perceived.

· "1.0": The drinking sensation suitable for a beer-flavored beverage is not perceived at all.

[Table 1]

Table 1

| | | Comparative Example 1 | Example 1 | Example 2 |
|---|---|---|---|---|
| Alcohol content | (v/v)% | 10.0 | 10.0 | 10.0 |
| Maltotetraose concentration | g/100 mL | 0.005 | 0.010 | 5.000 |
| Maltotetraose concentration/alcohol content | | 0.0005 | 0.0010 | 0.5000 |
| Drinking sensation | | 1.50 | 3.50 | 4.25 |
| Irritating bitterness | | 2.50 | 3.25 | 3.25 |

| | | Comparative Example 2 | Example 3 | Example 4 | Example 5 | Example 6 |
|---|---|---|---|---|---|---|
| Alcohol content | (v/v)% | 18.0 | 18.0 | 18.0 | 18.0 | 18.0 |
| Maltotetraose concentration | g/100 mL | 0.005 | 0.010 | 0.100 | 2.000 | 3.000 |
| Maltotetraose concentration/alcohol content | | 0.0003 | 0.0006 | 0.0056 | 0.1111 | 0.1667 |
| Drinking sensation | | 1.75 | 3.50 | 4.00 | 4.50 | 4.75 |
| Irritating bitterness | | 2.00 | 3.50 | 4.00 | 4.50 | 4.50 |

|  |  | Comparative Example 3 | Example 7 | Example 8 |
|---|---|---|---|---|
| Alcohol content | (v/v)% | 20.0 | 20.0 | 20.0 |
| Maltotetraose concentration | g/100 mL | 0.005 | 0.010 | 2.000 |
| Maltotetraose concentration/alcohol content | | 0.0003 | 0.0005 | 0.1000 |
| Drinking sensation | | 2.00 | 4.00 | 4.75 |
| Irritating bitterness | | 1.50 | 3.25 | 4.00 |

|  |  | Comparative Example 4 | Example 9 | Example 10 |
|---|---|---|---|---|
| Alcohol content | (v/v)% | 30.0 | 30.0 | 30.0 |
| Maltotetraose concentration | g/100 mL | 0.005 | 0.010 | 5.000 |
| Maltotetraose concentration/alcohol content | | 0.0002 | 0.0003 | 0.1667 |
| Drinking sensation | | 2.00 | 4.00 | 4.75 |
| Irritating bitterness | | 1.00 | 3.25 | 4.50 |

As compared with the beer-flavored beverages of Comparative Examples 1 to 4, in the beer-flavored beverages of Examples 1 to 10, unsuitable bitterness was suppressed, and as a result, high alcohol beer-flavored beverages having pleasant drinking sensation were obtained.

Examples 11 to 18

<Preparation of beverage>

Crushed barley malt was fed in a preparation tank containing 40 L of warm water kept at 40 to 55°C, then the temperature was raised to 78°C while the temperature was repeatedly raised and kept in a stepwise manner, then malt dregs were removed by filtration, and a saccharified liquid was produced. Next, hops were further added to the saccharified liquid, boiling was performed, and solid-liquid separation treatment was performed to produce clear wort. Then, brewer's yeast (bottom-fermenting yeast) was added to the pre-fermentation liquid formed by cooling the wort, and the fermentation temperature and the fermentation time were adjusted to perform alcoholic fermentation in such a manner to achieve a predetermined alcohol content. Then, the yeast was removed by filtration to obtain a fermented liquid. Then, maltotetraose, carbonated water, and/or spirits were added to the fermented liquid in Examples 11 to 18 to produce a beer-flavored beverage. The produced beer-flavored beverage had a bitterness value of from 40 to 90 BUs, a sugar content of from 1.0 to 3.5 g/100 mL, an apparent fermentation degree of from 75 to 90%, a pH of from 4.2 to 4.7, and a carbon dioxide gas concentration of from 0.205 to 0.304 (w/w)%.

In each of the Examples and Comparative Examples, the alcohol content, the maltotetraose concentration, and the real extract concentration were each adjusted to the value shown in Table 2 by appropriately setting the set temperature and the holding time of each temperature region, the amount of hop added, the fermentation temperature, the fermentation time, and the like when preparing the saccharified liquid, and adjusting the maltotetraose concentration as necessary.

<Sensory evaluation>

Three panelists who had been regularly trained evaluated the beer-flavored beverages obtained in the Examples cooled to about 4°C for the "presence or absence of drinking sensation suitable for a beer-flavored beverage" of each beverage for testing by a score in a range of from 5.0 (maximum value) to 1.0 (minimum value) in increments of 0.5 based on the score criteria described below, and average values of the scores of the three panelists were calculated. The results are listed in Table 1.

In the evaluation, samples that meet the following criteria "5.0", "4.0", "3.0", "2.0", and "1.0" were prepared in advance to standardize the criteria among the panelists. In addition, in the sensory evaluation of all Table 2, for the same beverage, no difference in a score value of 1.5 or more was observed among the panelists.

# EP 4 644 518 A1

[Score criteria for presence or absence of drinking sensation suitable for beer-flavored beverage]

· "5.0": The drinking sensation suitable for a beer-flavored beverage is very strongly perceived.
· "4.0": The drinking sensation suitable for a beer-flavored beverage is strongly perceived.
· "3.0": The drinking sensation suitable for a beer-flavored beverage is sufficiently perceived.
· "2.0": The drinking sensation suitable for a beer-flavored beverage is hardly perceived.
· "1.0": The drinking sensation suitable for a beer-flavored beverage is not perceived at all.

[Table 2]

Table 2

| | | Example 11 | Example 12 | Example 13 | Example 14 | Example 15 | Example 16 | Example 17 |
|---|---|---|---|---|---|---|---|---|
| Alcohol content | (v/v)% | 18.0 | 18.0 | 18.0 | 18.0 | 18.0 | 18.0 | 18.0 |
| Maltotetraose concentration | g/100 mL | 2.000 | 2.000 | 2.000 | 2.000 | 2.000 | 2.000 | 2.000 |
| Real extract concentration | (w/w)% | 1.0 | 5.0 | 10.0 | 15.0 | 20.0 | 25.0 | 30.0 |
| Maltotetraose concentration/alcohol content | | 0.1111 | 0.1111 | 0.1111 | 0.1111 | 0.1111 | 0.1111 | 0.1111 |
| Maltotetraose concentration/real extract concentration | | 2.000 | 0.400 | 0.200 | 0.133 | 0.100 | 0.080 | 0.067 |
| Real extract concentration/alcohol content | | 0.06 | 0.28 | 0.56 | 0.83 | 1.11 | 1.39 | 1.67 |
| Presence or absence of drinking sensation | | 3.00 | 3.50 | 3.75 | 4.00 | 4.50 | 4.75 | 5.00 |

From Table 2, the beer-flavored beverages prepared in Examples 11 to 17 resulted in having drinking sensation suitable for the beer-flavored beverage. In addition, these beer-flavored beverages were all high alcohol beer-flavored beverages having suppressed unsuitable bitterness and having pleasant drinking sensation.

## Claims

1. A beer-flavored beverage having an alcohol content of 10.0 (v/v)% or more and a maltotetraose concentration of 0.007 g/100 mL or more.

2. The beer-flavored beverage according to claim 1, wherein a real extract concentration is 0.5 (w/w)% or more and 40.0 (w/w)% or less.

3. The beer-flavored beverage according to claim 1 or 2, wherein a ratio [maltotetraose concentration/alcohol content] of the maltotetraose concentration (unit: g/100 mL) to the alcohol content (unit: (v/v)%) is 0.0006 or more and 0.8000 or less.

4. The beer-flavored beverage according to claim 1 or 2, wherein the alcohol content is 15.0 (v/v)% or more and 30.0 (v/v)% or less.

5. The beer-flavored beverage according to claim 1 or 2, wherein the maltotetraose concentration is 0.050 g/100 mL or more and 3.500 g/100 mL.

6.  The beer-flavored beverage according to claim 1 or 2, wherein a ratio [maltotetraose concentration/real extract concentration] of the maltotetraose concentration (unit: g/100 mL) to the real extract concentration (unit: (w/w)%) is 0.060 or more and 5.000 or less.

7.  The beer-flavored beverage according to claim 1 or 2, wherein a ratio [real extract concentration/alcohol content] of the real extract concentration (unit: (w/w)%) to the alcohol content (unit: (v/v)%) is 0.005 or more and 5.00 or less.

8.  A method for producing a beer-flavored beverage, the method comprising at least steps (a) and (b) described below:

    step (a): adjusting an alcohol content of the beer-flavored beverage to 10.0 (v/v)% or more; and
    step (b): adjusting a maltotetraose concentration of the beer-flavored beverage to 0.070 g/100 mL or more.

## INTERNATIONAL SEARCH REPORT

| | International application No. |
|---|---|
| | **PCT/JP2023/045605** |

### A. CLASSIFICATION OF SUBJECT MATTER

*C12G 3/04*(2019.01)i; *C12C 5/02*(2006.01)i; *C12C 11/00*(2006.01)i; *C12C 12/00*(2006.01)i; *C12G 3/021*(2019.01)i
FI:   C12G3/04; C12G3/021; C12C5/02; C12C11/00 A; C12C12/00

According to International Patent Classification (IPC) or to both national classification and IPC

### B. FIELDS SEARCHED

Minimum documentation searched (classification system followed by classification symbols)

C12G3/04; C12C5/02; C12C11/00; C12C12/00; C12G3/021

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JMEDPlus/JST7580 (JDreamIII); CAplus/REGISTRY/MEDLINE/EMBASE/BIOSIS (STN)

### C. DOCUMENTS CONSIDERED TO BE RELEVANT

| Category* | Citation of document, with indication, where appropriate, of the relevant passages | Relevant to claim No. |
|---|---|---|
| X | JP 2002-253197 A (NATIONAL RESEARCH INST OF BREWING) 10 September 2002 (2002-09-10) claims, examples, table 1 | 1-3, 7, 8 |
| A | | 4-6 |
| A | JP 2010-207243 A (SAPPORO BREWERIES) 24 September 2010 (2010-09-24) claims, examples, paragraph [0048], table 2, fig. 3, 4 | 1-8 |
| A | WO 2021/066159 A1 (KABUSHIKI KAISHA HAYASHIBARA) 08 April 2021 (2021-04-08) example 15 | 1-8 |
| A | WO 2022/058568 A1 (HEINEKEN SUPPLY CHAIN B.V.) 24 March 2022 (2022-03-24) column 15, lines 11-18, example 1 | 1-8 |
| A | JP 2013-524857 A (ANHEUSER-BUSCH INBEV S.A.) 20 June 2013 (2013-06-20) table 1 | 1-8 |

☐ Further documents are listed in the continuation of Box C.   ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **11 March 2024** | **19 March 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

EP 4 644 518 A1

## INTERNATIONAL SEARCH REPORT
### Information on patent family members

| International application No. |
|---|
| **PCT/JP2023/045605** |

| Patent document cited in search report | | | Publication date (day/month/year) | Patent family member(s) | | | Publication date (day/month/year) |
|---|---|---|---|---|---|---|---|
| JP | 2002-253197 | A | 10 September 2002 | US 2004/0101591 A1 claims, examples, fig. 10 WO 2002/055652 A1 EP 1357176 A1 CN 1492921 A | | | |
| JP | 2010-207243 | A | 24 September 2010 | (Family: none) | | | |
| WO | 2021/066159 | A1 | 08 April 2021 | US 2023/0242957 A1 example 15 EP 4039693 A1 CN 114761574 A | | | |
| WO | 2022/058568 | A1 | 24 March 2022 | US 2023/0220318 A1 EP 4214304 A1 CN 116209745 A | | | |
| JP | 2013-524857 | A | 20 June 2013 | US 2013/0108735 A1 table 1 WO 2011/138128 A1 EP 2385100 A1 CN 103003408 A | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021159020 A